(19) Europäisches Patentamt
European Patent Office
Office européen des brevets

(11) **EP 4 726 489 A1**

(12) **EUROPEAN PATENT APPLICATION**

(43) Date of publication:
**15.04.2026 Bulletin 2026/16**

(21) Application number: **25158725.9**

(22) Date of filing: **19.02.2025**

(51) International Patent Classification (IPC):
**G05D 1/606** (2024.01)    **G05D 101/15** (2024.01)
**G05D 109/25** (2024.01)

(52) Cooperative Patent Classification (CPC):
**G05D 1/606;** G05D 2101/15; G05D 2109/254

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.10.2024 TW 113138339**

(71) Applicant: **Wistron Corporation
New Taipei City 22181 (TW)**

(72) Inventor: **WU, Chih Hung
22181 New Taipei City (TW)**

(74) Representative: **Viering, Jentschura & Partner
mbB
Patent- und Rechtsanwälte
Am Brauhaus 8
01099 Dresden (DE)**

Remarks:
Amended claims in accordance with Rule 137(2)
EPC.

(54) **DRONE, DRONE TRAINING METHOD, AND DRONE CONTROL METHOD**

(57)    A drone training method includes: inputting a plurality of wind speed components $(\omega_X,\omega_Y,\omega_Z)$ into a corresponding plurality of fuzzy functions $(M_X,M_Y,M_Z)$, to generate a plurality of wind speed membership values $(\rho_{X1},\rho_{X2},\rho_{XP},\rho_{Y1},\rho_{Y2},\rho_{YQ},\rho_{Z1},\rho_{Z2},\rho_{ZR})$ respectively; selecting one from the plurality of wind speed membership values $(\rho_{X1},\rho_{X2},\rho_{XP},\rho_{Y1},\rho_{Y2},\rho_{YQ},\rho_{Z1},\rho_{Z2},\rho_{ZR})$ corresponding to each of the wind speed components $(\omega_X,\omega_Y,\omega_Z)$, and generating a rule value based on the wind speed membership values $(\rho_{X1},\rho_{X2},\rho_{XP},\rho_{Y1},\rho_{Y2},\rho_{YQ},\rho_{Z1},\rho_{Z2},\rho_{ZR})$ corresponding to each of the wind speed components $(\omega_X,\omega_Y,\omega_Z)$; inputting the plurality of wind speed components $(\omega_X,\omega_Y,\omega_Z)$ into one of inference functions (E), where each rule value corresponds to one of the inference functions (E) as a weight respectively, and calculating a function sum of a plurality of inference functions (E) corresponding to each of the wind speed components $(\omega_X,\omega_Y,\omega_Z)$; generating a regression model after calculating an error function base on each offset component and the function sum corresponding to each of the wind speed components $(\omega_X,\omega_Y,\omega_Z)$ and optimizing the error function.

FIG. 4

EP 4 726 489 A1

## Description

## BACKGROUND

**Technical Field**

The present invention relates to a drone technology, and in particular, to a drone capable of correcting a position offset and a method.

**Related Art**

An application scope of drones is increasingly wide. From defense and military to aerial photography, from aerial photographing applications to patrol applications, and from public tasks to logistics transportation, drones gradually become an indispensable part of people's lives. However, during actual operation, drones often face challenges of various harsh environments, the most obvious of which is impact of wind. Wind not only affects steerability of a drone, but also affects flight stability. A sudden strong wind may even cause a flight accident.

## SUMMARY

In view of this, the applicant provides a drone training method, applicable to a drone. The drone includes a wind speed sensor and a position sensor. The drone training method includes: receiving a plurality of wind speed components generated by the wind speed sensor and a plurality of offset components generated by the position sensor, where the wind speed components correspond to the offset components one by one; inputting each of the wind speed components into a corresponding plurality of fuzzy functions, to generate a plurality of wind speed membership values respectively; selecting one from the plurality of wind speed membership values corresponding to each of the wind speed components, and generating a rule value based on the wind speed membership values corresponding to each of the wind speed components; inputting the plurality of wind speed components into inference functions, where each rule value corresponds to one of the inference functions as a weight respectively, and calculating a function sum of a plurality of inference functions corresponding to each of the wind speed components; and generating a regression model after calculating an error function base on each offset component and the function sum corresponding to each of the wind speed components and optimizing the error function.

The applicant further provides a drone, including a wind speed sensor, a position sensor, and a processor. The wind speed sensor is configured to measure a wind speed value, including a plurality of wind speed components. The position sensor is configured to measure an offset value, including a plurality of offset components. The processor is configured to perform the drone training method according to any embodiment of the present disclosure.

The applicant further provides a drone control method, for correcting a plurality of motor control signals. The drone control method includes: reading a plurality of wind speed components and a plurality of lookup tables, wherein each of the lookup tables corresponds to one of the motor control signals, and each of the plurality of lookup tables includes a regression model of a plurality of wind speed approximations and a compensation value; inputting each of the wind speed components into one of corresponding nearest neighbor functions, to generate the plurality of wind speed approximations; matching the plurality of wind speed approximations with the compensation values based on the corresponding lookup tables, to generate the compensation values; and correcting each of the motor control signals based on the compensation values generated by the lookup tables.

## BRIEF DESCRIPTION OF THE DRAWINGS

FIG. 1 is a schematic diagram of a drone known to the applicant being affected by an environmental wind.

FIG. 2 is a schematic block diagram of a drone according to some embodiments of the present disclosure.

FIG. 3 is a schematic diagram of a drone being affected by an environmental wind according to some embodiments of the present disclosure.

FIG. 4 is a flowchart of a drone control method according to some embodiments of the present disclosure.

FIG. 5 is a schematic diagram of signal transmission of a wind resistance controller according to some embodiments of the present disclosure.

FIG. 6 is a schematic diagram of a lookup table according to some embodiments of the present disclosure.

FIG. 7 is a schematic control flowchart of a drone control method according to some embodiments of the present disclosure.

FIG. 8 is a flowchart of a drone training method according to some embodiments of the present disclosure.

FIG. 9 is a schematic diagram of a model architecture of a regression model according to some embodiments of the present disclosure.

FIG. 10A is a schematic diagram of fuzzy functions of an X-axis wind speed component according to some embodiments of the present disclosure.

FIG. 10B is a schematic diagram of generating wind speed membership values by fuzzy functions of an X-axis wind speed component according to some embodiments of the present disclosure.

FIG. 11A is a schematic diagram of fuzzy functions of a Y-axis wind speed component according to some embodiments of the present disclosure.

FIG. 11B is a schematic diagram of generating wind speed membership values by fuzzy functions of a Y-axis wind speed component according to some embodiments of the present disclosure.

FIG. 12A is a schematic diagram of fuzzy functions of a Z-axis wind speed component according to some embodiments of the present disclosure.

FIG. 12B is a schematic diagram of generating wind speed membership values by fuzzy functions of a Z-axis wind speed component according to some embodiments of the present disclosure.

## DETAILED DESCRIPTION

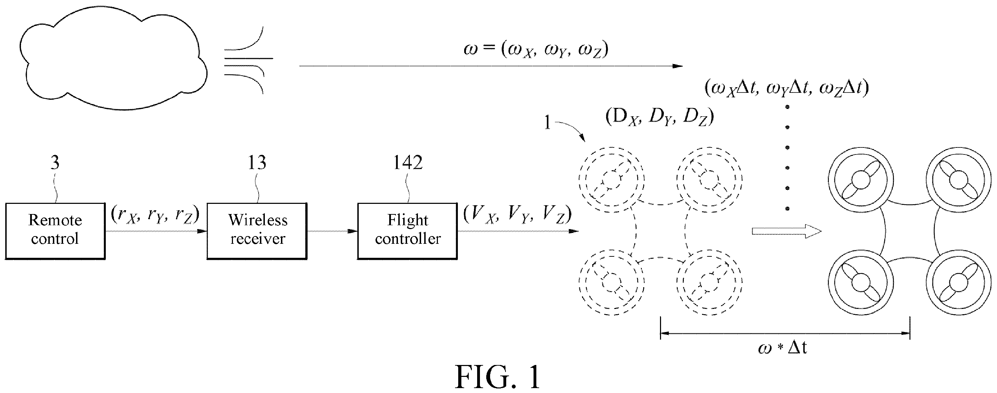

FIG. 1 is a schematic diagram of a drone known to the applicant being affected by an environmental wind. Referring to FIG. 1, a remote control 3 can be configured to set a destination position $D_X$, $D_Y$, $D_Z$ of a drone 1, and transmit a displacement $r_X$, $r_Y$, $r_Z$ to the drone 1 through a wireless signal. A wireless receiver 13 of the drone 1 receives the displacement $r_X$, $r_Y$, $r_Z$ and transmits the displacement $r_X$, $r_Y$, $r_Z$ to a flight controller 142. The flight controller 142 refers to the displacement $r_X$, $r_Y$, $r_Z$ and generates a motor control signal correspondingly. The motor control signal may include a motor control signal component $V_X$ in an X-axis direction, a motor control signal component $V_Y$ in a Y-axis direction, and a motor control signal component $V_Z$ in a Z-axis direction. A motor of the drone 1 drives the drone 1 to move to the destination position $D_X$, $D_Y$, $D_Z$ in response to the motor control signal. FIG. 1 shows impact of wind on the drone 1. When an environmental wind with a wind speed value $\omega$ is generated in a flight environment of the drone 1. The wind speed value $\omega$ includes a wind speed component $\omega_X$ in the X-axis direction, a wind speed component $\omega_Y$ in the Y-axis direction, and a wind speed component $\omega_Z$ in the Z-axis direction. The wind speed components $\omega_X$, $\omega_Y$, and $\omega_Z$ cause the drone 1 to deviate from the original destination position $D_X$, $D_Y$, $D_Z$ within a time difference $\Delta t$, and an offset value equals the wind speed value $\omega$ times the time difference $\Delta t$. An axis direction in the present disclosure may be an axis direction with the drone 1 as a coordinate center, an axis direction with the remote control 3 (or an operator) as a coordinate center, or an axis direction with a specified spatial position as a coordinate center. In this embodiment, the X-axis direction, the Y-axis direction, and the Z-axis direction are orthogonal to each other.

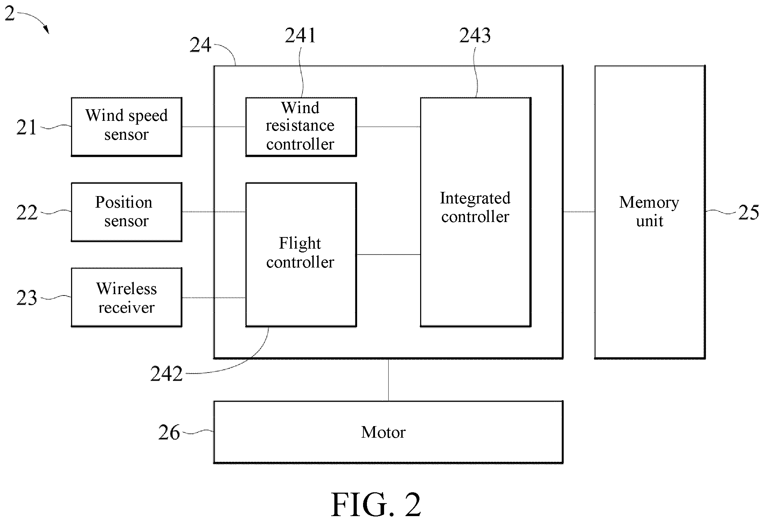

FIG. 2 is a schematic block diagram of a drone according to some embodiments of the present disclosure. Referring to FIG. 2, in this embodiment, a drone 2 includes a wind speed sensor 21, a position sensor 22, a wireless receiver 23, a processor 24, a memory unit 25, and a motor 26. The processor 24 is coupled to the wind speed sensor 21, the position sensor 22, the wireless receiver 23, the memory unit 25, and the motor 26 respectively. The wind speed sensor 21 is configured to measure a wind speed value $\omega$ of an environmental wind, and might divide the wind speed value $\omega$ into a plurality of wind speed components $\omega_X$, $\omega_Y$, and $\omega_Z$. The wind speed sensor 21 may be a cup anemometer, a vane anemometer, a pressure tube anemometer, or an ultrasonic anemometer. The position sensor 22 is configured to measure absolute coordinates or relative coordinates of the drone 2, for example, determine the absolute coordinates of the drone 2 through a GPS locator or a barometer, or determine the relative coordinates of the drone 2 by measuring a relative offset value through an inertial measurement unit (IMU) such as a gyroscope or an accelerometer. The wireless receiver 23 is configured to receive a control instruction from the outside of the drone 2, for example, a wireless signal generated by the remote control 3, to learn of a destination position $D_X$, $D_Y$, $D_Z$ set by an operator.

The processor 24 may be an SoC chip, a central processing unit (CPU), a microcontroller unit (MCU), an application-specific integrated circuit (ASIC), a field programmable gate array (FPGA), a neural network processor, a quantum processor, or a logic circuit. Referring to FIG. 2, in this embodiment, the processor 24 is configured to receive a control command or a measurement signal and generate a motor control signal to control the motor 26. Functions correspondingly implemented by the processor 24 may be divided into a wind resistance controller 241, a flight controller 242, and an integrated controller 243. Functions of the one or more controllers may be implemented by a single chip or a plurality of chips. The single chip forms the processor 24, or the plurality of chips jointly form the processor 24. In this embodiment, the drone 2 includes the processor 24, which may be configured to perform a drone control method and/or a drone training method according to any embodiment of the present disclosure.

The memory unit 25 may be a flash memory or a read-only memory (ROM), for example, an erasable programmable read-only memory (EPROM), a flash read-only memory (flash ROM), an electrically erasable programmable read-only memory (EEPROM), or a field-replaceable unit (FRU). In this embodiment, the memory unit 25 is configured to store the control command, the measurement signal, or the motor control signal. In some embodiments, the memory unit 25 may be configured to store program code, a lookup table T, or parameters of a drone control method and/or a drone training method according to any embodiment of the present disclosure.

The motor 26 adjusts a rotation speed according to the motor control signal. The motor control signal includes motor control signal components. The motor control signal components may correspond to a single motor 26 or a plurality of motors 26. When the motor control signal components correspond to a plurality of motors 26, rotation speeds generated by the different motors 26 in response to a same motor control signal component may be different. For example, for a four-axis drone, a motor control signal component $V_X$ may correspond to all of four motors 26, and the four motors 26 adopt different rotation speeds to jointly move the four-axis drone in the X-axis direction. Alternatively, a motor control signal component $V_Z$ may correspond to all of four motors 26, and the four motors 26 adopt a same rotation speed to jointly move the four-axis drone in the Z-axis direction.

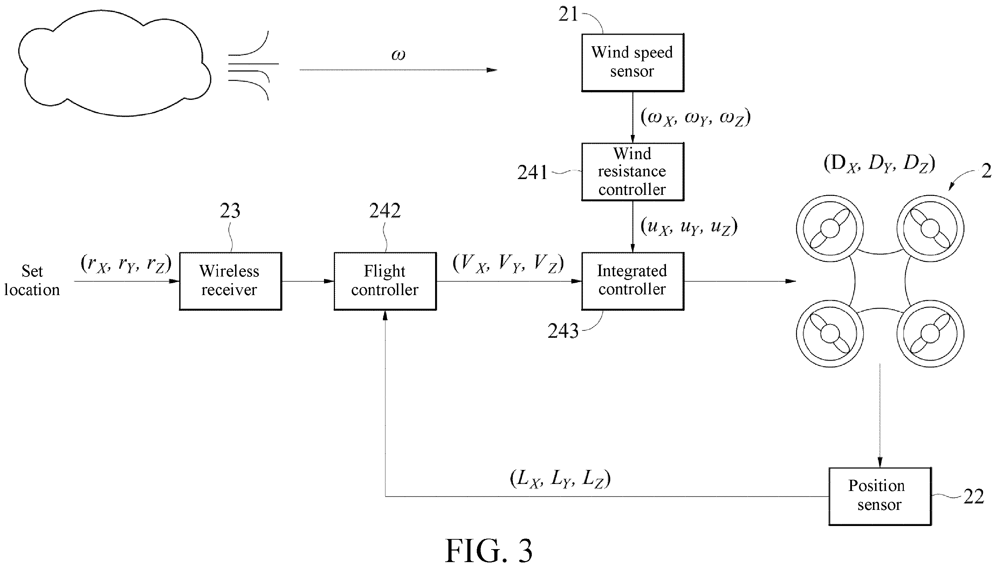

FIG. 3 is a schematic diagram of a drone being affected by an environmental wind according to some embodiments of the present disclosure. Referring to FIG. 2 and FIG. 3 together, in this embodiment, the processor 24 includes a wind resistance controller 241, a flight controller 242, and an integrated controller 243. The integrated controller 243 is coupled to the wind resistance controller 241 and the flight controller 242 respectively. The wind resistance controller 241 is coupled to the wind speed sensor 21. The flight controller 242 is coupled to the position sensor 22 and the wireless receiver 23. As shown in FIG. 3, the wireless receiver 23 of the drone 2 receives a displacement $r_X$, $r_Y$, $r_Z$ and transmits the displacement $r_X$, $r_Y$, $r_Z$ to the flight controller 242. The flight controller 242 refers to the displacement $r_X$, $r_Y$, $r_Z$, and generates a motor control signal component $V_X$, a motor control signal component $V_Y$, and a motor control signal component $V_Z$ correspondingly. The motor 26 of the drone 2 drives the drone 2 to move to a destination position $D_X$, $D_Y$, $D_Z$ in response to a motor control signal. In this embodiment, a flight environment generates an environmental wind with a wind speed value $\omega$. The wind speed value $\omega$ is measured by the wind speed sensor 21 to generate a wind speed measurement signal including information about wind speed components $\omega_X$, $\omega_Y$, and $\omega_Z$. The wind resistance controller 241 generates a compensation value, including compensation value components $u_X$, $u_Y$, and $u_Z$, corresponding to the wind speed measurement signal. The compensation value component $u_X$ corresponds to the motor control signal component $V_X$, the compensation value component uy corresponds to the motor control signal component Vy, and the compensation value component $u_Z$ corresponds to the motor control signal component $V_Z$. The integrated controller 243 corrects the motor control signal according to the compensation value, so that an offset value caused by the environmental wind is offset. In this embodiment, the position sensor 22 of the drone 2 further transmits a position signal $L_X$, $L_Y$, $L_Z$ of the drone 2 back to the flight controller 242, and the flight controller 242 determines a current relative position or absolute position of the drone 2 based on the position signal $L_X$, $L_Y$, $L_Z$, and adjusts the motor control signal based on the displacement $r_X$, $r_Y$, $r_Z$ to drive the drone 2 to move to the destination position $D_X$, $D_Y$, $D_Z$.

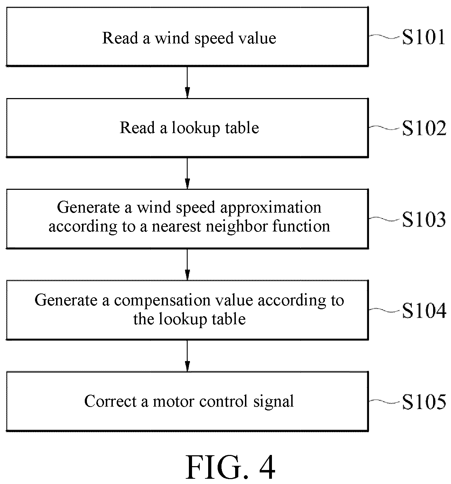

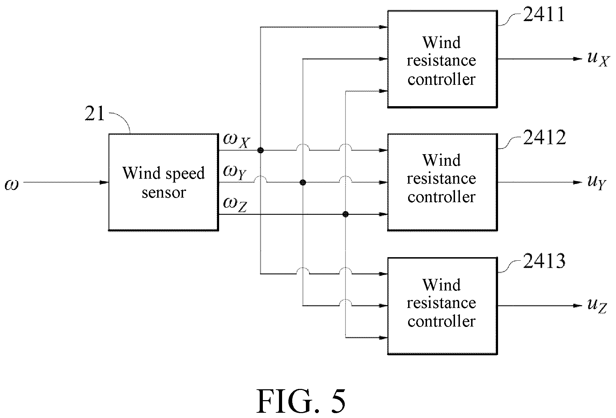

FIG. 4 is a flowchart of a drone control method according to some embodiments of the present disclosure. Referring to FIG. 4, in this embodiment, in the drone control method, a wind speed value $\omega$ is read (step S101). For example, the processor 24 of the drone 2 performs the drone control method, and receives the wind speed value $\omega$ from the wind speed sensor 21. The wind speed value $\omega$ includes a plurality of wind speed components. In this embodiment, the wind speed value $\omega$ includes three wind speed components, that is, wind speed components $\omega_X$, $\omega_Y$, and $\omega_Z$. FIG. 5 is a schematic diagram of signal transmission of a wind resistance controller according to some embodiments of the present disclosure. Referring to FIG. 5, in this embodiment, there are three wind resistance controllers 241 in total. A wind resistance controller 2411 corresponds to wind compensation in the X-axis direction, a wind resistance controller 2412 corresponds to wind compensation in the Y-axis direction, and a wind resistance controller 2413 corresponds to wind compensation in the Z-axis direction. The wind resistance controllers 2411, 2412, and 2413 respectively receive the wind speed components $\omega_X$, $\omega_Y$, and $\omega_Z$, and generate compensation value components $u_X$, $u_Y$, and $u_Z$ in specific axis directions to correct motor control signal components $V_X$, $V_Y$, and $V_Z$ in the specific axis directions.

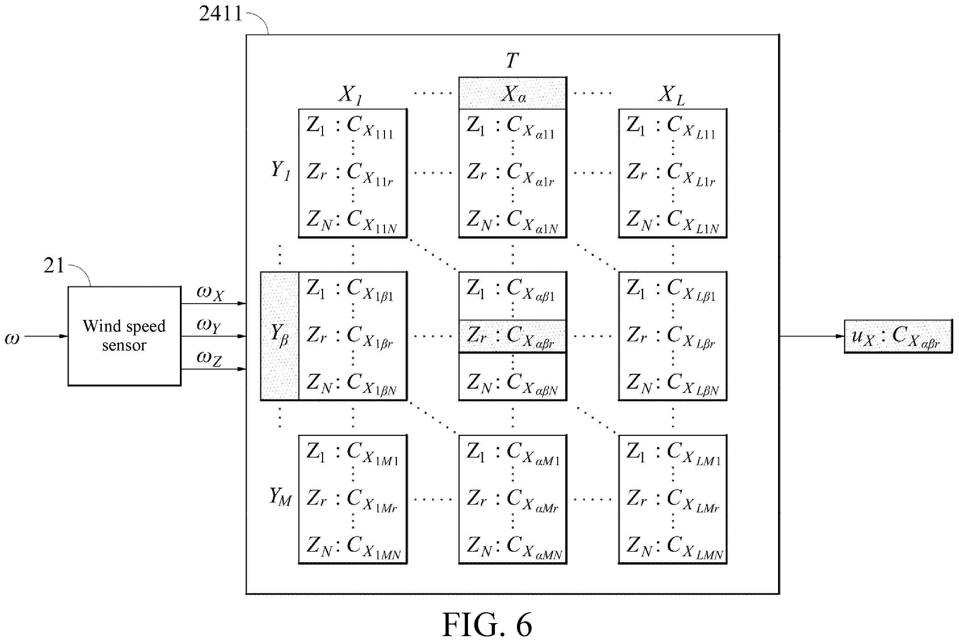

FIG. 6 is a schematic diagram of a lookup table according to some embodiments of the present disclosure. Referring to FIG. 4 to FIG. 6 together, specifically, the wind resistance controllers 241 read lookup tables T respectively (step S102). To be specific, the wind resistance controller 2411 reads the lookup table T in the X-axis direction, the wind resistance controller 2412 reads the lookup table T in the Y-axis direction, and the wind resistance controller 2413 reads the lookup table T in the Z-axis direction. In FIG. 6, the wind resistance controller 2411 is used as an example for description. In this embodiment, a lookup table T is a three-dimensional data structure. Columns of the lookup table T represent a total of L columns of data in the X-axis direction, rows thereof represent a total of M rows of data in the Y-axis direction, and layers thereof represent a total of N layers of data in the Z-axis direction. Each element stores a compensation value Cx. Therefore, the lookup table T read by the wind resistance controller 2411 in this embodiment includes a correspondence between three wind speed approximations and one compensation value Cx. In addition, the lookup table T read by the wind resistance controller 2412 and the lookup table T read by the wind resistance controller 2413 also include a correspondence between three wind speed approximations and one compensation value Cy or compensation value $C_Z$, and the lookup tables T are different in content. Therefore, the wind resistance controllers 2411, 2412, and 2413 respectively generate the compensation value components $u_X$, the compensation value component $u_Y$, or the compensation value component $u_Z$ in response to the same three wind speed components $\omega_X$, $\omega_Y$, and $\omega_Z$.

One of the considerations for that the wind resistance controllers 241 respectively receive a plurality of wind speed components $\omega_X$, $\omega_Y$, and $\omega_Z$ to perform calculation is that because the drone 2 have different force-bearing areas and different force bearing angles, the three controllers are needed to calculate the compensation value components $u_X$, $u_Y$, and $u_Z$ of the drone 2 for different axis directions respectively. Specifically, a housing of the drone 2 usually has slopes at different angles. Even if the environmental wind evenly blows the drone 2 along a specific axis direction, a wind direction of the environmental wind is not orthogonal to all the slopes. Such a phenomenon makes it impossible to calculate compensation of the drone 2 for wind simply from a single direction. Because when a body of the drone 2 is blown, normal forces in different directions generated by wind on the drone 2 partially twist the body of the drone 2, resulting in a control failure. Therefore, in this embodiment, the drone 2 uses the wind resistance controllers 2411, 2412, and 2413 with inputs in three directions to compensate for the three wind speed components $\omega_X$, $\omega_Y$, and $\omega_Z$.

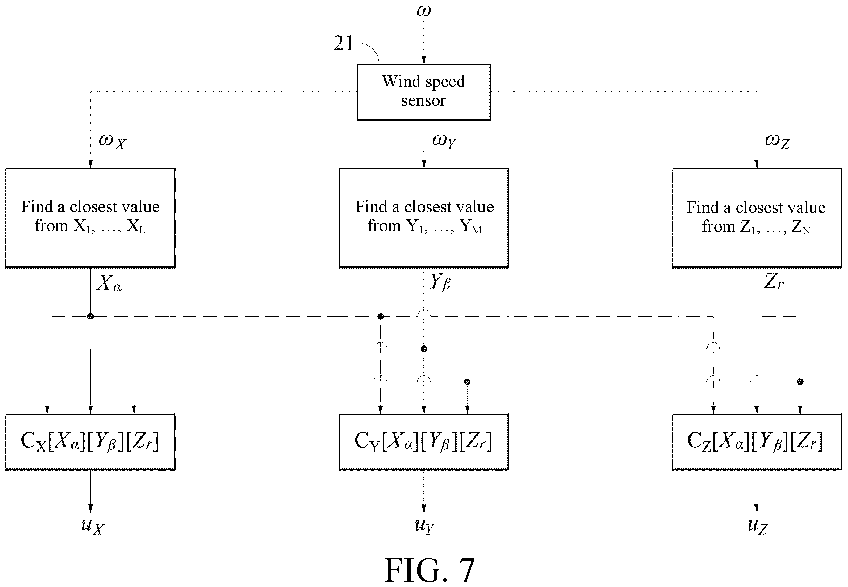

FIG. 7 is a schematic control flowchart of a drone control method according to some embodiments of the present disclosure. Referring to FIG. 4 and FIG. 7 together, after the wind speed value $\omega$ is read (step S101), in the drone control method, a wind speed approximation is generated according to a nearest neighbor function (step S103). The nearest neighbor function performs regression according to a value of wind speed component to generate a specific value closest to the value of the wind speed component by using, for example, but not limited to, a rounding function, a bottoming function, a ceiling function, or a shortest distance method. Specifically, in some embodiments, the nearest neighbor function includes a plurality of discrete wind speed component values. In the drone control method, one discrete wind speed component value in the plurality of discrete wind speed component values closest to the wind speed component input into the nearest neighbor function is determined, to generate a wind speed approximation. For example, the nearest neighbor function includes discrete wind speed component values [-1.1, 0, 1.1, 2.2, 3.3, 4.4]. When a wind speed component $\omega_X$ with a value of 3 is input into the nearest neighbor function, and a compensation value with a value of 3.3 is generated by using the shortest distance method. In another embodiment, the nearest neighbor function includes discrete wind speed component values [-3, -2, - 1, 0, 1, 2, 3]. When a wind speed component $\omega_X$ with a value of 1.4 is input into the nearest neighbor function, and a compensation value with a value of 1 is generated by rounding off. The wind speed components each correspond to a nearest neighbor function, and the nearest neighbor functions may be the same or different.

The discrete wind speed component values may be defined by taking a wind speed component range to which the drone 2 is subject into consideration. The wind speed component range may be defined manually or measured by using the wind speed sensor 21 during use of the drone 2. In some embodiments, the drone 2 collects statistics on a wind speed component range according to a plurality of wind speed components generated by the wind speed sensor 21. For example, the wind speed component range may be defined by taking maximum and minimum wind speed components to which the drone 2 is subject in different axis directions in a test scenario into consideration. In the embodiment of FIG. 6, a maximum wind speed component value in the Y-axis direction defined in the lookup table T is a value of a row $Y_M$, a minimum wind speed component value is a value of a row $Y_1$, and a wind speed component range defined by the two values is evenly divided to generate a total of M discrete wind speed component values. Alternatively, the wind speed component range is defined based on multiples of average wind speed components to which the drone 2 is subject in different axis directions plus or minus their standard deviations.

After obtaining wind speed approximations, in the drone control method, compensation values $C_X$, $C_Y$, and $C_Z$ are generated according to the lookup table T (step S104), and the motor control signal is corrected using the compensation values $C_W$, $C_Y$, and $C_Z$ (step S105). As shown in FIG. 7, the nearest neighbor functions of the three axis directions respectively generate a wind speed approximation $X_\alpha$, a wind speed approximation $Y_\beta$, and a wind speed approximation $Z_\gamma$. The processor 24 performs matching based on the same three wind speed approximations in a lookup table T applicable to each axis direction to generate compensation values $C_X$, $C_Y$, and $C_Z$. Therefore, in the drone control method, in a processing mode of the lookup table T, the compensation values $C_X$, $C_Y$, and $C_Z$ can be quickly generated corresponding to different wind speed conditions by performing only numerical comparison, and in response to an instantaneous wind change, a position offset caused by the instantaneous wind change to the drone 2 can be offset. In addition, a computing amount of the processor 24 is reduced, power consumption is greatly reduced, and a flight time of the drone 2 is extended.

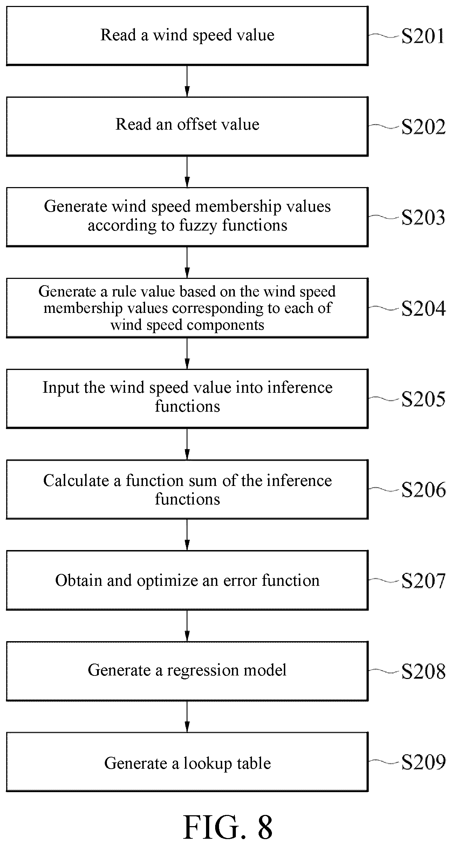

FIG. 8 is a flowchart of a drone training method according to some embodiments of the present disclosure. Referring to FIG. 8, in this embodiment, in the drone training method, a wind speed value $\omega$ is read (step S201). For example, the processor 24 of the drone 2 performs the drone training method, and receives the wind speed value $\omega$ from the wind speed sensor 21 after controlling the drone 2 to take off and setting the drone 2 to a hovering state. In some other embodiments, the processor 24 of the drone 2 controls the drone 2 to take off and sets the drone 2 to fly at a fixed speed or a fixed acceleration, and receives the wind speed value $\omega$ from the wind speed sensor 21. The wind speed value $\omega$ includes a plurality of wind speed components. In this embodiment, the wind speed value $\omega$ includes three wind speed components, that is, wind speed components $\omega_X$, $\omega_Y$, and $\omega_Z$. In addition, in the drone training method, an offset value is read (step S202). As shown in FIG. 1, an environmental wind with the wind speed value $\omega$ causes the drone 1 to deviate from an original destination position $D_X$, $D_Y$, $D_Z$, and an offset value is equivalent to a distance difference between an actual position of the drone 1 and a destination position $D_X$, $D_Y$, $D_Z$. In some embodiments, the drone 2 has a position sensor 22 to measure an offset value. The offset value includes a plurality of offset components. In this embodiment, the offset value includes three offset components, respectively corresponding to offsets caused by the wind speed components $\omega_X$, $\omega_Y$, and $\omega_Z$. For example, after an operator lifts off the drone 2, the wind speed sensor 21 of the drone 2 records the wind speed components $\omega_X$, $\omega_Y$, and $\omega_Z$, and the position sensor 22 records corresponding offset components.

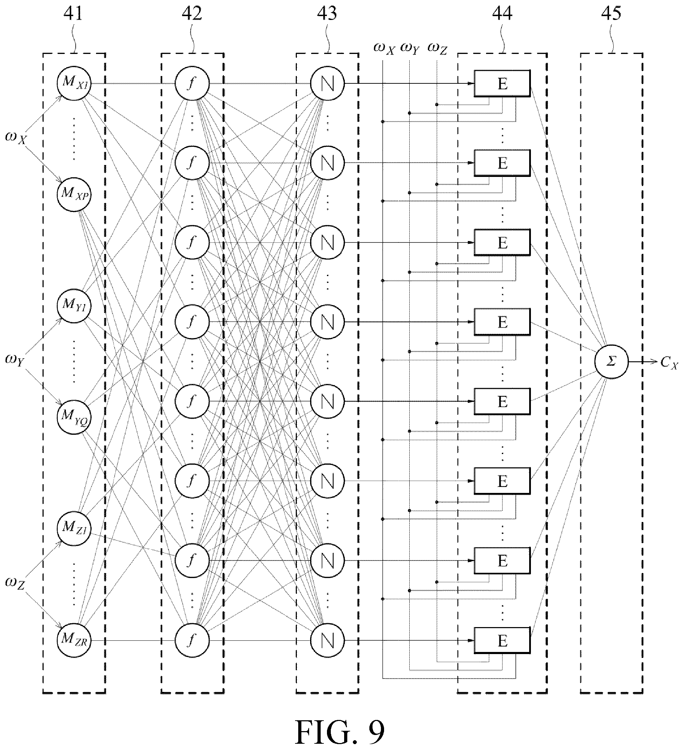

FIG. 9 is a schematic diagram of a model architecture of a regression model according to some embodiments of the present disclosure. Referring to FIG. 9, in this embodiment, the regression model is implemented by a neural network. The neural network includes an input layer 41, a rule layer 42, a normalization layer 43, an inference layer 44, and an output layer 45. In this embodiment, the input layer 41, the rule layer 42, the normalization layer 43, and the inference layer 44 each include a plurality of nodes, and the output layer 45 includes a single node. The plurality of nodes of the input layer 41 are respectively coupled to the plurality of nodes of the rule layer 42. The plurality of nodes of the rule layer 42 are respectively coupled to the plurality of nodes of the normalization layer 43. The plurality of nodes of the normalization layer 43 are coupled to the plurality of nodes of the inference layer 44 one-to-one. The plurality of nodes of the inference layer 44 are coupled to the single node of the output layer 45.

Referring to FIG. 8 and FIG. 9 together, in this embodiment, in the drone training method, each of the wind speed components is input into a corresponding plurality of fuzzy functions, and wind speed membership values are generated according to fuzzy functions (step S203). As shown in FIG. 9, a wind speed component $\omega_X$ is correspondingly input into a plurality of nodes in the input layer 41, and the nodes are represented by a fuzzy function $M_{X1}$ to a fuzzy function $M_{XP}$ (a total of P nodes). A wind speed component $\omega_Y$ is correspondingly input into another group of a plurality of nodes in the input layer 41, and the nodes are represented by a fuzzy function $M_{Y1}$ to a fuzzy function $M_{YQ}$ (a total of Q nodes). A wind speed component $\omega_Z$ is correspondingly input into a remaining plurality of nodes in the input layer 41, and the nodes are represented by a fuzzy function $M_{Z1}$ to a fuzzy function $M_{ZR}$ (a total of R nodes).

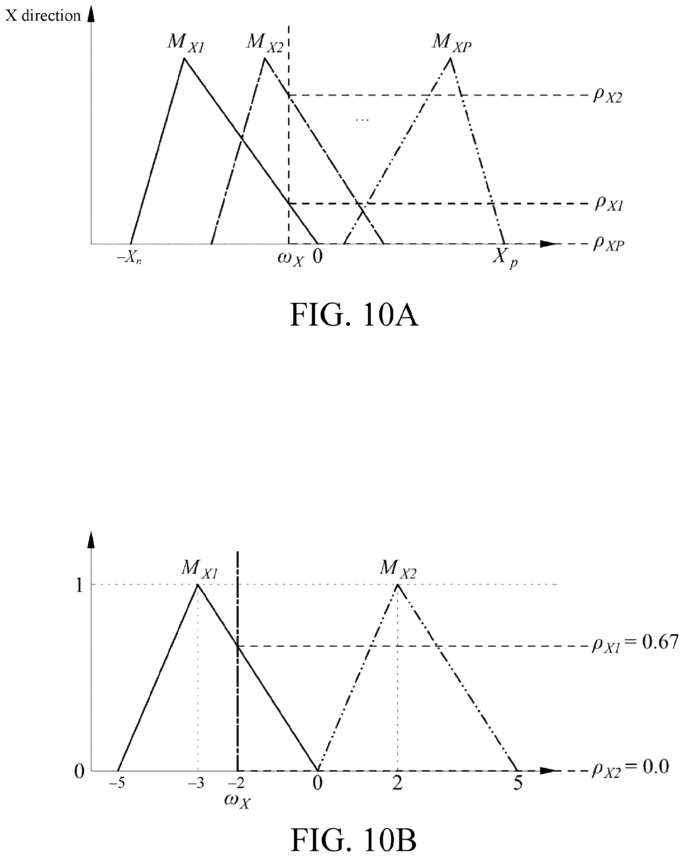

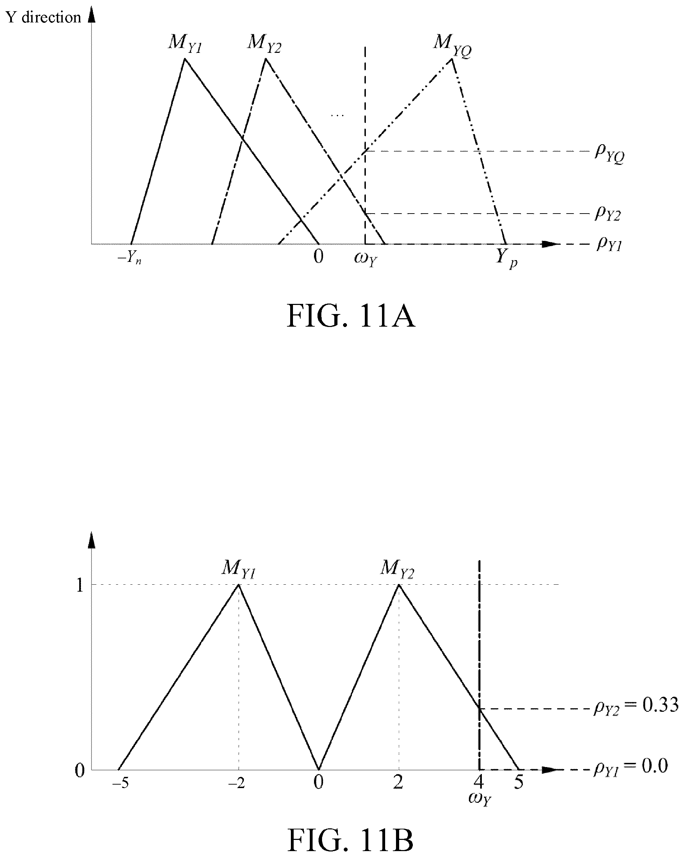

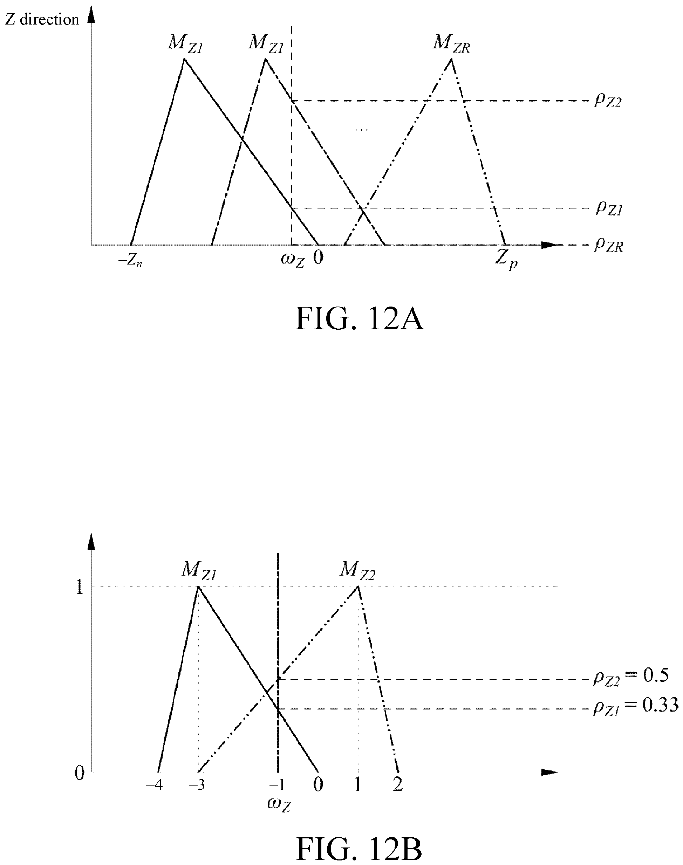

FIG. 10A is a schematic diagram of fuzzy functions of an X-axis wind speed component according to some embodiments of the present disclosure. FIG. 11A is a schematic diagram of fuzzy functions of a Y-axis wind speed component according to some embodiments of the present disclosure. FIG. 12A is a schematic diagram of fuzzy functions of a Z-axis wind speed component according to some embodiments of the present disclosure. Referring to FIG. 10A, FIG. 11A, and FIG. 12A together, in the schematic diagrams for reference, a horizontal axis represents a wind speed value $_\omega$, and a vertical axis represents a membership degree. Using FIG. 10A as an example, a total of P fuzzy functions $M_X$ are included (FIG. 10A shows only three of the P fuzzy functions $M_X$). In this embodiment, each fuzzy function $M_X$ is represented by a triangle, and a membership degree of a vertex thereof (that is, a core of the fuzzy function $M_X$) is 1. For the fuzzy function $M_{X1}$, when the wind speed value $\omega$ ranges from $-X_n$ to 0, and a membership degree thereof is greater than 0. In this embodiment, when the wind speed component $\omega_X$ is correspondingly input into a plurality of nodes in the input layer 41, a node corresponding to the fuzzy function $M_{X1}$ generates a membership value $\rho_{X1}$, a node corresponding to the fuzzy function $M_{X2}$ generates a membership value $\rho_{X2}$, and a node corresponding to the fuzzy function $M_{XP}$ generates a membership value $\rho_{XP}$. Similarly, when the wind speed component $\omega_Y$ is correspondingly input into another group of a plurality of nodes in the input layer 41, a node corresponding to the fuzzy function $M_{Y1}$ generates a membership value $\rho_{Y1}$, a node corresponding to the fuzzy function $M_{Y2}$ generates a membership value $\rho_{Y2}$, and a node corresponding to the fuzzy function $M_{YQ}$ generates a membership value $\rho_{YQ}$. Likewise, when the wind speed component $\omega_Z$ is correspondingly input into a remaining plurality of nodes in the input layer 41, a node corresponding to the fuzzy function $M_{Z1}$ generates a membership value $\rho_{Z1}$, a node corresponding to the fuzzy function $M_{Z2}$ generates a membership value $\rho_{Z2}$, and a node corresponding to the fuzzy function $M_{ZR}$ generates a membership value $\rho_{ZR}$.

FIG. 10B is a schematic diagram of generating wind speed membership values by fuzzy functions of an X-axis wind speed component according to some embodiments of the present disclosure. FIG. 11B is a schematic diagram of generating wind speed membership values by fuzzy functions of a Y-axis wind speed component according to some embodiments of the present disclosure. FIG. 12B is a schematic diagram of generating wind speed membership values by fuzzy functions of a Z-axis wind speed component according to some embodiments of the present disclosure. Referring to FIG. 10B, FIG. 11B, and FIG. 12B together, for example, when the wind speed component $\omega_X$ is - 2, the wind speed component $\omega_Y$ is 4, and the wind speed component $\omega_Z$ is -1, the wind speed components $\omega_X$, $\omega_Y$, and $\omega_Z$ are input into the neural network. As shown in FIG. 10B, the wind speed component $\omega_X = -2$ is input into the fuzzy function $M_{X1}$, and a generated membership value $\rho_{X1}$ is 0.67. Because a range of the wind speed value $\omega$ of the fuzzy function $M_{X2}$ does not cover -2, a generated membership value $\rho_{X2}$ is 0, and the same applies to the remaining fuzzy functions $M_X$. As shown in FIG. 11B, the wind speed component $\omega_Y=4$ is input into the fuzzy function $M_{Y1}$. Because a range of the wind speed value $\omega$ of the fuzzy function $M_{Y1}$ does not cover 4, a generated membership value $\rho_{Y1}$ is 0. A generated membership value $\rho_{Y2}$ of the fuzzy function $M_{Y2}$ is 0.33, and the same applies to the remaining fuzzy functions $M_Y$. As shown in FIG. 12B, the wind speed component $\omega_Z=-1$ is input into the fuzzy function $M_{Z1}$, a generated membership value $\rho_{Z1}$ is 0.33, a generated membership value $\rho_{Z2}$ of the fuzzy function $M_{Z2}$ is 0.5, and the same applies to the remaining fuzzy functions $M_Z$. Therefore, when the wind speed components $\omega_X$, $\omega_Y$, and $\omega_Z$ are input into the neural network, a plurality of wind speed membership values are generated respectively.

In some embodiments, in the drone training method, the plurality of fuzzy functions at equal core intervals are generated within a wind speed component range. For example, referring to FIG. 10A, in the X-axis direction, a wind speed value $\omega$ at a lower limit of the wind speed component range is $-X_n$, and a wind speed value $\omega$ at an upper limit of the wind speed component range is $X_p$. An interval between a core of the fuzzy function $M_{X1}$ and a core of the fuzzy function $M_{X2}$ equals an interval between the core of the fuzzy function $M_{X2}$ and a core of the fuzzy function $M_{X3}$, also equals an interval between the core of the fuzzy function $M_{X3}$ and a core of the fuzzy function $M_{X4}$, also equals an interval between a core of the fuzzy function $M_{XP-1}$ and a core of the fuzzy function $M_{XP}$, and so on. Therefore, a distribution of the fuzzy functions is dispersed in each wind speed component range, so that a distribution of the membership values is evenly dispersed. In some embodiments, the wind speed component ranges define a wind range that the drone 2 can withstand, or extreme or average upper and lower limit wind ranges actually measured.

Referring to FIG. 8 and FIG. 9, in the drone training method, one of the plurality of wind speed membership values corresponding to each of the wind speed components is selected to obtain the wind speed membership value, and a rule value is generated according to the wind speed membership values corresponding to the each of wind speed components (step S204). As shown in FIG. 9, the rule layer 42 receives the membership values generated by the input layer 41 to generate a rule value. For example, the input layer 41 generates a membership value $\rho_{X1}$, a membership value $\rho_{X2}$, ..., and a membership value $\rho_{XP}$. The membership values correspond to the wind speed component $\omega_X$. In the drone training method, a single one, for example, the membership value $\rho_{X1}$, is selected from them. The input layer 41 generates a membership value $\rho_{Y1}$, a membership value $\rho_{Y2}$, ..., and a membership value $\rho_{YQ}$. The membership values correspond to the wind speed component $\omega_Y$. In the drone training method, a single one, for example, the membership value $\rho_{Y1}$, is selected from them. The input layer 41 generates a membership value $\rho_{Z1}$, a membership value $\rho_{Z2}$, ..., and a membership value $\rho_{ZR}$. The membership values correspond to the wind speed component $\omega_Z$. In the drone training method, a single one, for example, the membership value $\rho_{Z1}$, is selected from them. In the drone training method, a rule value $w_{111}$ is generated based on the membership value $\rho_{X1}$, the membership value $\rho_{Y1}$, and the membership value $\rho_{Z1}$. In another example, in the drone training method, a rule value $w_{211}$ is generated based on the membership value $\rho_{X2}$, the membership value $\rho_{Y1}$, and the membership value $p_{Z1}$. Therefore, in the drone training method, a rule value $w_{PQR}$ is generated based on the membership value $\rho_{XP}$, the membership value $p_{YQ}$, and the membership value $\rho_{ZR}$, and $P\times Q\times R$ rule values are generated in total.

In some embodiments, in the drone training method, a minimum value among the wind speed membership values corresponding to all the wind speed components is used as the rule value. For example, referring to FIG. 10B, FIG. 11B, and FIG. 12B, if the membership value $\rho_{X1}$ is 0.67, the membership value $\rho_{Y1}$ is 0, and the membership value $\rho_{Z1}$ is 0.33, in the drone training method, a rule value $w_{111}$ obtained based on a minimum value among the membership values is 0. If the membership value $\rho_{X1}$ is 0.67, the membership value $\rho_{Y2}$ is 0.33, and the membership value $\rho_{Z2}$ is 0.5, in the drone training method, a rule value $w_{122}$ obtained based on a minimum value among the membership values is 0.33. In some other embodiments, in the drone training method, an accumulated product of the wind speed membership values corresponding to all the wind speed components is used as the rule value. For example, if the membership value $\rho_{X1}$ is 0.67, the membership value $\rho_{Y1}$ is 0, and the membership value $\rho_{Z1}$ is 0.33, in the drone training method, a rule value $w_{111}$ obtained based on an accumulated product of the membership values is 0. If the membership value $\rho_{X1}$ is 0.67, the membership value $\rho_{Y2}$ is 0.33, and the membership value $\rho_{Z2}$ is 0.5, in the drone training method, a rule value $w_{122}$ obtained based on an accumulated product of the membership values is 0.11055.

In some embodiments, in the drone training method, the rule values are divided by a sum of all the rule values, to normalize the rule values. Referring to FIG. 9, in this embodiment, each node of the normalization layer 43 receives rule values output from all the nodes of the rule layer 42. The nodes of the normalization layer 43 calculate normalized rule values according to the following Formula 1:

$$\overline{w_{ijk}} = \frac{w_{ijk}}{\sum_{x=1}^{P}\sum_{y=1}^{Q}\sum_{z=1}^{R} w_{xyz}}$$

(Formula 1)

where $i$, $j$, and $k$ are numbers of rule values, and $P$ is a total number of rule values corresponding the wind speed component $\omega_X$, $Q$ is a total number of rule values corresponding the wind speed component $\omega_Y$, and $R$ is a total number of rule values corresponding the wind speed component $\omega_Z$. For example, assuming that $P$, $Q$, and $R$ are all respectively 2, and rule values are $w_{111}$=0, $w_{112}$=0, $w_{121}$=0.33, $w_{122}$=0.33, $w_{211}$=0, $w_{212}$=0, $w_{221}$=0, and $w_{222}$=0, normalized rule values obtained based on the formula 1 are $\overline{w_{111}}$=0, $\overline{w_{112}}$=0, $\overline{w_{121}}$=0.5, $\overline{w_{122}}$=0.5, $\overline{w_{211}}$=0, $\overline{w_{212}}$=0, $\overline{w_{221}}$=0, and $\overline{w_{222}}$=0.

The nodes in the inference layer 44 receive the rule values or the normalized rule values as weights for the inference functions E. For example, referring to FIG. 9, the inference layer 44 includes nodes whose quantity is the same as that of the nodes of the normalization layer 43. Each node in the inference layer 44 separately receives a normalized weight value output from one node of the normalization layer 43, and uses the normalized weight value as a weight for the inference function E. In addition, the nodes in the inference layer 44 separately receive the wind speed components $\omega_X$, $\omega_Y$, and $\omega_Z$, to input the wind speed value $\omega$ into the inference functions E (step S205). In some embodiments, the inference function E is a multivariate linear regression model function, including N regression coefficients and a bias value, where a value of N equals a quantity of the plurality of wind speed components. For example, the inference function E may be represented by the following Formula 2:

$$E(\omega_X, \omega_Y, \omega_Z) = \overline{w_{ijk}} f_{ijk} = \overline{w_{ijk}}(p_{ijk}\omega_X + q_{ijk}\omega_Y + r_{ijk}\omega_Z + s_{ijk})$$

(Formula 2)

where $\overline{w_{ijk}}$ is a rule value or a normalized rule value, $p_{ijk}$, $q_{ijk}$, and $r_{ijk}$ are regression coefficients, and $s_{ijk}$ is a bias value. In this embodiment, there are three wind speed components $\omega_X$, $\omega_Y$, and $\omega_Z$, so that the inference function E includes three regression coefficients. For example, when the wind speed component $\omega_X$ is -2, the wind speed component $\omega_Y$ is 4, the wind speed component $\omega_Z$ is -1, and a normalized rule value $\overline{w_{121}}$ is 0.5, the inference function E (-2, 4, -1) is represented by 0.5×(-2$p_{ijk}$ + 4$q_{ijk}$ - $r_{ijk}$ + $s_{ijk}$). In this embodiment, the regression coefficients and the bias value may be learned through an iterative process, which is described below in detail.

In the drone training method, a function sum of the inference functions E is calculated (step S206). For example, referring to FIG. 9, a node of the output layer 45 receives the inference functions E output from all the nodes of the inference layer 44. The output layer 45 obtains a function sum of a plurality of inference functions E. The function sum corresponds to the wind speed component $\omega_X$. The function sum may be represented by the following Formula 3:

$$C = \sum_{i=1}^{P}\sum_{j=1}^{Q}\sum_{k=1}^{R} E_{ijk}$$

(Formula 3)

where E is an inference function, and C is a function sum corresponding to a wind speed component. Then, in the drone training method, an error function is obtained and optimized (step S207). Specifically, in the drone training method, an error function between each offset component and a function sum corresponding to the wind speed component is calculated. In some embodiments, the error function may be represented by the following Formula 4:

$$e = \frac{1}{2}(U - C)^2$$

(Formula 4)

where e is an error function corresponding to one of wind speed components, $U$ is an offset component corresponding to the one of the wind speed components, and C is a function sum corresponding to the one of the wind speed components. In this way, an input of the regression model is wind speed components $\omega_X$, $\omega_Y$, and $\omega_Z$, and an output thereof is an offset component corresponding to one of the wind speed components $\omega_X$, $\omega_Y$, and $\omega_Z$, that is, the corresponding wind speed component $\omega_X$ in this embodiment. In some embodiments, in the drone training method, an offset component is taken as a negative number, and the offset component that is taken as a negative number is used as an output of the regression model, to correspond to a wind speed component in a same axis direction. Specifically, as shown in FIG. 1 and FIG. 3, an environmental wind causes a position offset of the drone, and the position sensor 22 of the drone 2 may measure an offset value caused by the environmental wind. To compensate for offset value components, the drone 2 needs to generate compensation value components $u_X$, $u_Y$, and $u_Z$ to offset impact caused by the environmental wind. Directions of the offset value components are opposite to directions of the compensation value components $u_X$, $u_Y$, and $u_Z$.

In the drone training method, an optimization problem of an error function is calculated. For example, a minimum value, that is, $min_\theta\left(\frac{1}{2}(U-C)^2\right)$, of an error function e is calculated, to optimize a model parameter $\theta$ of the regression model, for example, a regression coefficient or a bias value of an inference function E, a function type of fuzzy functions $M_X$, $M_Y$, and $M_Z$, a core position, or positions of left and right endpoints. In the foregoing optimization problem, the model parameter $\theta$ may be obtained through a gradient descent method, which is represented by the following Formula 5:

$$\theta_{[k+1]} = \theta_{[k]} - \eta * \frac{\partial e}{\partial \theta_{[k]}} \qquad \text{(Formula 5)}$$

where k is an iteration order, $\theta$ is a model parameter corresponding to one of the wind speed components, and $\eta$ is a learning rate. Therefore, in this embodiment, in the drone training method, model parameters $\theta$ of the regression model are obtained through an optimization iterative process, to generate the regression model (step S208). FIG. 9 illustrates a regression model corresponding to the wind speed component $\omega_X$. Similarly, in the drone training method, regression models corresponding to the wind speed components can be respectively trained based on offset values corresponding to the wind speed components as model outputs. As shown in FIG. 2, in some embodiments, model parameters $\theta$ of the regression models are stored in the memory unit 25, the drone 2 may generate compensation values $C_X$, $C_Y$, and $C_Z$ through the regression models, to offset impact of wind on the drone 2.

In some embodiments, after the regression models are generated in the drone training method, the drone 2 is set to the hovering mode again (which may also be a fixed speed mode or a fixed acceleration mode), and the compensation values $C_X$, $C_Y$, and $C_Z$ are generated through the regression models, to offset impact of wind on the drone 2. In this case, the drone 2 may perform step S201 to step S208 again. Specifically, the drone 2 receives wind speed components generated by the wind speed sensor 21 again (step 201), and inputs the wind speed components into regression models to generate a plurality of compensation values $C_X$, $C_Y$, and $C_Z$. After the drone 2 corrects motor control signals respectively based on the plurality of compensation values $C_X$, $C_Y$, and $C_Z$, the drone 2 is controlled to hover (or fly at a fixed speed or a fixed acceleration) using the plurality of corrected motor control signals, and receives an offset value generated by the position sensor 22 again (step 202). Therefore, the drone 2 may retrain the regression models according to the wind speed components and the offset value, to optimize a wind resistance control capability of the drone 2.

In some embodiments, in the drone training method, a lookup table T is generated according to the regression models (step S209), and the lookup table T may be stored in the memory unit 25. Specifically, in the drone training method, a plurality of discrete wind speed component values at equal intervals are generated within a specific wind speed component range. For example, assuming that a wind speed range on an X-axis is $[-X_n, X_p]$, L discrete wind speed component values $X_1, X_2, ..., X_L$ are generated. Assuming that a wind speed range on a Y-axis is $[-Y_n, Y_p]$, M discrete wind speed component values $Y_1, Y_2, ..., Y_M$ are generated. Assuming that a wind speed range on a Z-axis is $[-Z_n, Z_p]$, N discrete wind speed component values $Z_1, Z_2, ..., Z_N$ are generated. An interval between the discrete wind speed component value $X_1$ and the discrete wind speed component value $X_2$ equals an interval between the discrete wind speed component value $X_2$ and the discrete wind speed component value $X_3$, also equals an interval between the discrete wind speed component value $X_{L-1}$ and the discrete wind speed component value $X_L$, and so on. Then, in the drone training method, after the plurality of discrete wind speed component values are input into the regression model, a lookup table T is generated and stored.

As shown in FIG. 9, in this embodiment, in the drone training method, each of the discrete wind speed component values $X_1, X_2, ..., X_L$ is used to replace the wind speed component value $\omega_X$ and input into the regression model, each of the discrete wind speed component values $Y_1, Y_2, ..., Y_M$ is used to replace the wind speed component value $\omega_Y$ and input into the regression model, each of the discrete wind speed component values $Z_1, Z_2, ..., Z_N$ is used to replace the wind speed component value $\omega_Z$ and input into the regression model, so that a compensation value $C_X$ corresponding to the wind speed component $\omega_X$ can be generated. Therefore, a lookup table T including $L \times M \times N$ compensation values is generated. Similarly, a compensation value $C_Y$ corresponding to the wind speed component $\omega_Y$ and a compensation value $C_Z$ corresponding to the wind speed component $\omega_Z$ can be generated. In some embodiments, as shown in FIG. 6, the lookup table T is used as a lookup table T in the drone control method. Similarly, in the drone training method, the foregoing steps can also be repeated to input discrete wind speed component values into other regression models to generate compensation values corresponding to other wind speed components, thereby generating lookup tables T corresponding to different wind speed components. As shown in FIG. 5, different lookup tables T are applied to different wind resistance controllers 2411, 2412, and 2413, to generate compensation value components $u_X$, $u_Y$, and $u_Z$ to offset impact of wind speed components $\omega_X$, $\omega_Y$, and $\omega_Z$ on the drone 2.

## Claims

1. A drone training method, applicable to a drone (2), wherein the drone (2) comprises a wind speed sensor (21) and a position sensor (22), and the drone training method comprises:

receiving a plurality of wind speed components ($\omega_X, \omega_Y, \omega_Z$) generated by the wind speed sensor (21) and a plurality of offset components generated by the position sensor (22), wherein the wind speed components ($\omega_X, \omega_Y, \omega_Z$) correspond to the offset components one by one;

inputting each of the wind speed components ($\omega_X, \omega_Y, \omega_Z$) into a corresponding plurality of fuzzy functions ($M_X, M_Y, M_Z$), to generate a plurality of wind speed membership values ($\rho_{X1}, \rho_{X2}, \rho_{XP}, \rho_{Y1}, \rho_{Y2}, \rho_{YQ}, \rho_{Z1}, \rho_{Z2}, \rho_{ZR}$) respectively;

selecting one from the plurality of wind speed membership values ($\rho_{X1}, \rho_{X2}, \rho_{XP}, \rho_{Y1}, \rho_{Y2}, \rho_{YQ}, \rho_{Z1}, \rho_{Z2}, \rho_{ZR}$) corresponding to each of the wind speed components ($\omega_X, \omega_Y, \omega_Z$), and generating a rule value based on the wind speed membership values ($\rho_{X1}, \rho_{X2}, \rho_{XP}, \rho_{Y1}, \rho_{Y2}, \rho_{YQ}, \rho_{Z1}, \rho_{Z2}, \rho_{ZR}$) corresponding to each of the wind speed components ($\omega_X, \omega_Y, \omega_Z$);

inputting the plurality of wind speed components ($\omega_X, \omega_Y, \omega_Z$) into inference functions (E), wherein each rule value corresponds to one of the inference functions (E) as a weight respectively, and calculating a function sum of a plurality of inference functions (E) corresponding to each of the wind speed components ($\omega_X, \omega_Y, \omega_Z$); and

generating a regression model after calculating an error function base on each offset component and the function sum corresponding to each of the wind speed components ($\omega_X, \omega_Y, \omega_Z$) and optimizing the error function.

2. The drone training method according to claim 1, wherein in the drone training method, a minimum value among the wind speed membership values ($\rho_{X1}, \rho_{X2}, \rho_{XP}, \rho_{Y1}, \rho_{Y2}, \rho_{YQ}, \rho_{Z1}, \rho_{Z2}, \rho_{ZR}$) corresponding to all the wind speed components ($\omega_X, \omega_Y, \omega_Z$) is used as the rule value.

3. The drone training method according to claim 1, further comprising:

dividing the rule values by a sum of all the rule values, to normalize the rule values; and

inputting the plurality of wind speed components ($\omega_X, \omega_Y, \omega_Z$) into the inference functions (E), wherein each normalized rule value corresponds to one of the inference functions (E) as a weight respectively.

4. The drone training method according to claim 1, further comprising:

generating a plurality of discrete wind speed component values at equal intervals within a range of wind speed components; and

generating and storing a lookup table (T) after inputting the plurality of discrete wind speed component values into the regression model.

5. The drone training method according to claim 4, further comprising: collecting statistics on the range of wind speed components based on the plurality of wind speed components ($\omega_X, \omega_Y, \omega_Z$) generated by the wind speed sensor (21).

6. The drone training method according to claim 1, further comprising: generating the plurality of fuzzy functions ($M_X, M_Y, M_Z$) at equal core intervals within a range of wind speed component.

7. The drone training method according to claim 1, wherein the inference function (E) is a multivariate linear regression model function, comprising N regression coefficients and a bias value, wherein a value of N equals a quantity of the plurality of wind speed components ($\omega_X, \omega_Y, \omega_Z$).

8. The drone training method according to claim 1, further comprising: negating each offset component, generating the regression model after calculating the error function between the negated offset component and the function sum corresponding to the wind speed component ($\omega_X, \omega_Y, \omega_Z$), and optimizing the error function.

9. The drone training method according to claim 1, wherein the drone (2) is configured to control the drone (2) according to a plurality of motor control signals ($V_X, V_Y, V_Z$), and the drone training method further comprises:

re-receiving another plurality of wind speed components ($\omega_X, \omega_Y, \omega_Z$) generated by the wind speed sensor (21);

generating a plurality of compensation values ($u_X, u_Y, u_Z$) after inputting the another plurality of wind speed components ($\omega_X, \omega_Y, \omega_Z$) into the regression model; and

correcting the plurality of motor control signals ($V_X, V_Y, V_Z$) based on the plurality of compensation values ($u_X, u_Y, u_Z$) respectively, and controlling the drone (2) based on the plurality of corrected motor control signals ($V_X, V_Y, V_Z$).

10. The drone training method according to claim 1, further comprising: calculating the error function between the offset component and the function sum corresponding to the wind speed component $(\omega_X,\omega_Y,\omega_Z)$ according to the following formula:

$$e = \frac{1}{2}(U - C)^2$$

wherein e is the error function, U is one of the plurality of offset components, and C is the function sum corresponding to one of the wind speed components $(\omega_X,\omega_Y,\omega_Z)$.

11. The drone training method according to claim 10, further comprising: optimizing the error function according to a gradient descent method, to obtain a model parameter of the regression model, wherein the model parameter is selected from a group comprising a regression coefficient of the inference function (E), a bias value of the inference function (E), a function type of the fuzzy function $(M_X,M_Y,M_Z)$, a core position of the fuzzy function $(M_X,M_Y,M_Z)$, a position of a left endpoint of the fuzzy function $(M_X,M_Y,M_Z)$, a position of a right endpoint of the fuzzy function $(M_X,M_Y,M_Z)$, and a combination thereof.

12. A drone control method, for correcting a plurality of motor control signals $(V_X,V_Y,V_Z)$, wherein the drone control method comprises:

reading a plurality of wind speed components $(\omega_X,\omega_Y,\omega_Z)$ and a plurality of lookup tables (T), wherein each of the lookup tables (T) corresponds to one of the motor control signals $(V_X,V_Y,V_Z)$, and each of the plurality of lookup tables (T) comprises a regression model of a plurality of wind speed approximations $(X_\alpha,Y_\beta,Z_\gamma)$ and a compensation value $(u_X,u_Y,u_Z)$;
inputting each of the wind speed components $(\omega_X,\omega_Y,\omega_Z)$ into one of corresponding nearest neighbor functions, to generate the plurality of wind speed approximations $(X_\alpha,Y_\beta,Z_\gamma)$;
matching the plurality of wind speed approximations $(X_\alpha,Y_\beta,Z_\gamma)$ with the compensation values $(u_X,u_Y,u_Z)$ based on the corresponding lookup tables (T), to generate the compensation values $(u_X,u_Y,u_Z)$; and
correcting each of the motor control signals $(V_X,V_Y,V_Z)$ based on the compensation values $(u_X,u_Y,u_Z)$ generated by the lookup tables (T).

13. The drone control method according to claim 12, wherein the nearest neighbor function comprises a plurality of discrete wind speed component values, and determining, among the plurality of discrete wind speed component values, the discrete wind speed component value closest to each of wind speed component $(\omega_X,\omega_Y,\omega_Z)$ input into the nearest neighbor function, to generate a wind speed approximation $(X_\alpha,Y_\beta,Z_\gamma)$,

14. The drone control method according to claim 12, further comprising: receiving the plurality of wind speed components $(\omega_X,\omega_Y,\omega_Z)$ generated by a wind speed sensor (21), and respectively correcting each of the motor control signals $(V_X,V_Y,V_Z)$ based on the compensation values $(u_X,u_Y,u_Z)$ generated by the lookup tables (T), to control a plurality of motors (26) respectively.

15. A drone (2), comprising:

a wind speed sensor (21), configured to measure a wind speed value, comprising a plurality of wind speed components $(\omega_X,\omega_Y,\omega_Z)$;
a memory (25), configured to store a plurality of lookup tables (T); and
a processor (24), configured to:

read a plurality of wind speed components $(\omega_X,\omega_Y,\omega_Z)$ and a plurality of lookup tables (T), wherein each of the lookup tables (T) corresponds to one of the motor control signals $(V_X,V_Y,V_Z)$, and each of the plurality of lookup tables (T) comprises a regression model of a plurality of wind speed approximations $(X_\alpha,Y_\beta,Z_\gamma)$ and a compensation value $(u_X,u_Y,u_Z)$;
input each of the wind speed components $(\omega_X,\omega_Y,\omega_Z)$ into one of corresponding nearest neighbor functions, to generate the plurality of wind speed approximations $(X_\alpha,Y_\beta,Z_\gamma)$;
match the plurality of wind speed approximations $(X_\alpha,Y_\beta,Z_\gamma)$ with the compensation values $(u_X,u_Y,u_Z)$ based on the corresponding lookup tables (T), to generate the compensation values $(u_X,u_Y,u_Z)$; and
correct each of the motor control signals $(V_X,V_Y,V_Z)$ based on the compensation values $(u_X,u_Y,u_Z)$ generated by the lookup tables (T).

**Amended claims in accordance with Rule 137(2) EPC.**

1. A drone control method, for correcting a plurality of motor control signals $(V_X,V_Y,V_Z)$, wherein the drone control method **characterized by** comprising:

   receiving a plurality of wind speed components $(\omega_X,\omega_Y,\omega_Z)$ generated by a wind speed sensor (21);
   reading a plurality of lookup tables (T), wherein each of the lookup tables (T) corresponds to one of the motor control signals $(V_X,V_Y,V_Z)$, and each of the plurality of lookup tables (T) comprises a regression model of a plurality of wind speed approximations $(X_\alpha,Y_\beta,Z_\gamma)$ and a compensation value $(u_X,u_Y,u_Z)$;
   inputting each of the wind speed components $(\omega_X,\omega_Y,\omega_Z)$ into one of corresponding nearest neighbor functions, to generate the plurality of wind speed approximations $(X_\alpha, Y_\beta,Z_\gamma)$;
   matching the plurality of wind speed approximations $(X_\alpha, Y_\beta,Z_\gamma)$ with the compensation values $(u_X,u_Y,u_Z)$ based on the corresponding lookup tables (T), to generate the compensation values $(u_X,u_Y,u_Z)$; and
   correcting each of the motor control signals $(V_X,V_Y,V_Z)$ based on the compensation values $(u_X,u_Y,u_Z)$ generated by the lookup tables (T) to control a plurality of motors (26) respectively.

2. The drone control method according to claim 1, wherein the nearest neighbor function comprises a plurality of discrete wind speed component values, and determining, among the plurality of discrete wind speed component values, the discrete wind speed component value closest to each of wind speed component $(\omega_X,\omega_Y,\omega_Z)$ input into the nearest neighbor function, to generate a wind speed approximation $(X_\alpha, Y_\beta,Z_\gamma)$.

3. A drone (2), **characterized by** comprising:

   a wind speed sensor (21), configured to measure a wind speed value, comprising a plurality of wind speed components $(\omega_X,\omega_Y,\omega_Z)$;
   a memory (25), configured to store a plurality of lookup tables (T); and
   a processor (24), configured to:

   read the plurality of wind speed components $(\omega_X,\omega_Y,\omega_Z)$ and a plurality of lookup tables (T), wherein each of the lookup tables (T) corresponds to one of the motor control signals $(V_X,V_Y,V_Z)$, and each of the plurality of lookup tables (T) comprises a regression model of a plurality of wind speed approximations $(X_\alpha,Y_\beta,Z_\gamma)$ and a compensation value $(u_X,u_Y,u_Z)$;
   input each of the wind speed components $(\omega_X,\omega_Y,\omega_Z)$ into one of corresponding nearest neighbor functions, to generate the plurality of wind speed approximations $(X_\alpha, Y_\beta,Z_\gamma)$;
   match the plurality of wind speed approximations $(X_\alpha, Y_\beta,Z_\gamma)$ with the compensation values $(u_X,u_Y,u_Z)$ based on the corresponding lookup tables (T), to generate the compensation values $(u_X,u_Y,u_Z)$; and
   correct each of the motor control signals $(V_X,V_Y,V_Z)$ applied to control a plurality of motors (26) based on the compensation values $(u_X,u_Y,u_Z)$ generated by the lookup tables (T).

FIG. 1

FIG. 2

FIG. 3

| Read a wind speed value | ~S101 |
| --- | --- |

↓

| Read a lookup table | ~S102 |
| --- | --- |

↓

| Generate a wind speed approximation according to a nearest neighbor function | ~S103 |
| --- | --- |

↓

| Generate a compensation value according to the lookup table | ~S104 |
| --- | --- |

↓

| Correct a motor control signal | ~S105 |
| --- | --- |

# FIG. 4

FIG. 5

FIG. 6

EP 4 726 489 A1

$\omega$

21

Wind speed
sensor

$\omega_X$

$\omega_Y$

$\omega_Z$

Find a closest value
from $X_1, ..., X_L$

Find a closest value
from $Y_1, ..., Y_M$

Find a closest value
from $Z_1, ..., Z_N$

$X_\alpha$

$Y_\beta$

$Z_r$

$C_X[X_\alpha][Y_\beta][Z_r]$

$C_Y[X_\alpha][Y_\beta][Z_r]$

$C_Z[X_\alpha][Y_\beta][Z_r]$

$u_X$

$u_Y$

$u_Z$

FIG. 7

| Read a wind speed value | S201 |

| Read an offset value | S202 |

| Generate wind speed membership values according to fuzzy functions | S203 |

| Generate a rule value based on the wind speed membership values corresponding to each of wind speed components | S204 |

| Input the wind speed value into inference functions | S205 |

| Calculate a function sum of the inference functions | S206 |

| Obtain and optimize an error function | S207 |

| Generate a regression model | S208 |

| Generate a lookup table | S209 |

FIG. 8

FIG. 9

FIG. 10A

FIG. 10B

FIG. 11A

FIG. 11B

FIG. 12A

FIG. 12B

Europäisches
Patentamt
European
Patent Office
Office européen
des brevets

# EUROPEAN SEARCH REPORT

**Application Number**

EP 25 15 8725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/080376 A1 (YAO LIQUN [GB] ET AL) 28 March 2013 (2013-03-28) * Paragraphs [0003], [0023], [0091], [0144], [0148], [0156], Figures 4, 6. * | 1-11 | INV. G05D1/606 G05D101/15 G05D109/25 |
| A | BIAN LUPENG ET AL: "Wind Disturbance Estimation and Compensation for Quadcopters using Fuzzy Neural Network", 2022 CHINA AUTOMATION CONGRESS (CAC), IEEE, 25 November 2022 (2022-11-25), pages 4624-4629, XP034305579, DOI: 10.1109/CAC57257.2022.10055759 [retrieved on 2023-03-13] * Abstract, page 4626 left column, Figures 2, 4. * | 1-11 | |
| Y | US 2021/097874 A1 (CONNOR MICHAEL A [US]) 1 April 2021 (2021-04-01) * Paragraphs [0012], [0016]; Figure 3 * | 12-15 | TECHNICAL FIELDS SEARCHED (IPC) G05D B64C |
| Y | Anonymous: "Lookup table - Wikipedia", , 11 March 2022 (2022-03-11), XP093049940, Retrieved from the Internet: URL:https://en.wikipedia.org/w/index.php?title=Lookup_table&oldid=1076479618 [retrieved on 2023-05-26] * Page 3. * | 12-15 | |
| A | US 2011/295569 A1 (HAMKE ERIC E [US] ET AL) 1 December 2011 (2011-12-01) * Paragraphs [0041]-[0042], figure 1. * | 12-15 | |

The present search report has been drawn up for all claims

| Place of search | Date of completion of the search | Examiner |
|---|---|---|
| Munich | 1 August 2025 | Roch, Vincent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

<table>
<tr><td>

Europäisches<br>
Patentamt<br>
European<br>
Patent Office<br>
Office européen<br>
des brevets

</td><td>

**Application Number**

**EP 25 15 8725**

</td></tr>
</table>

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

1. claims: 1-11

   Alternative method of training a neural fuzzy network.
   ---

2. claims: 12-15

   Compensation for wind effects on a drone flight.
   ---

## ANNEX TO THE EUROPEAN SEARCH REPORT
## ON EUROPEAN PATENT APPLICATION NO.

EP 25 15 8725

01-08-2025

| Patent document cited in search report | Publication date | Patent family member(s) | | Publication date |
|---|---|---|---|---|
| US 2013080376 A1 | 28-03-2013 | EP | 2287786 A1 | 23-02-2011 |
| | | EP | 2467809 A1 | 27-06-2012 |
| | | US | 2013080376 A1 | 28-03-2013 |
| | | WO | 2011021044 A1 | 24-02-2011 |
| US 2021097874 A1 | 01-04-2021 | NONE | | |
| US 2011295569 A1 | 01-12-2011 | EP | 2390670 A2 | 30-11-2011 |
| | | JP | 5893836 B2 | 23-03-2016 |
| | | JP | 2011246105 A | 08-12-2011 |
| | | US | 2011295569 A1 | 01-12-2011 |

EPO FORM P0459

For more details about this annex : see Official Journal of the European Patent Office, No. 12/82